# EUROPEAN PATENT APPLICATION

(11) **EP 4 846 849 A2**
(43) Date of publication of application: **02.12.2026**
(21) Application number: 26202597.6
(22) Date of filing: 29.07.2024
(51) Int. Cl.: A01N 43/82

(54) **FUNGICIDAL COMPOSITIONS COMPRISING AZOLES**

(30) Priority: 09.08.2023 EP 23190490
(62) Document number(s) of the earlier application(s) in accordance with Art. 76 EPC: 24749249.9 / 4 757 610
(71) Applicant: BASF Agricultural Solutions Deutschland GmbH, 67117 Limburgerhof (DE)
(72) Inventor: SHORT, Tim, Stockport, SK1 3GG (GB); BRAHM, Lutz, 67117 Limburgerhof (DE); GEWEHR, Markus, 67117 Limburgerhof (DE)
(74) Representative: AP-IP

(57) **Abstract**

The present invention relates to fungicidal compositions comprising azoles (compounds I) and at least one active compounds II. The invention also relates to an agrochemical composition comprising the composition and a solvent of solid carrier. Further, the invention relates to a nontherapeutic use of the inventive compositions controlling phytopathogenic harmful fungi.

## Description

The present invention relates to a fungicidal composition comprising as active component 1)
(I-1) methyl 2-[2-chloro-4-(4-chlorophenoxy)phenyl]-2-hydroxy-3-(1,2,4-triazol-1-yl)propanoate
(I-2) 2-[2-chloro-4-(4-chlorophenoxy)phenyl]-2-hydroxy-3-(1,2,4-triazol-1-yl)propanoic acid as active component 2) at least one compound, or an N-oxide, or an agriculturally useful salt thereof, selected from the group consisting of
(II-1) methyl-N-(2-[1-(4-chlorphenyl)-1H-pyrazol-3-yl]oxymethylphenyl)-(N-methoxy)carbamate,
(II-2) 4-(2,2-difluor-benzo[1,3]dioxol-4-yl)pyrrol-3-carbonitril,
(II-3) sulfur,
(II-4) 3-(difluoromethyl)-N-[(R)-2,3-dihydro-1,1,3-trimethyl-1H-inden-4-yl]-1-methyl-1H-pyrazole-4-carboxamide,
(II-5) 3-(difluoromethyl)-N-[(3RS)-7-fluoro-2,3-dihydro-1,1,3-trimethyl-1H-inden-4-yl]-1-methyl-1H-pyrazole-4-carboxamide,
(II-6) [(1S)-2,2-bis(4-fluorophenyl)-1-methyl-ethyl] (2S)-2-[(3-acetoxy-4-methoxy-pyridine-2-carbonyl)amino]propanoate,
(II-7) 2-{2-[(7,8-difluoro-2-methyl-3-quinolyl)oxy]-6-fluorophenyl}propan-2-ol,
(II-8) 5-fluoro-4-imino-3-methyl-1-(p-tolylsulfonyl)pyrimidin-2-one,
(II-9) (2RS)-2-[4-(4-chlorophenoxy)-2-(trifluoromethyl)phenyl]-1-(1H-1,2,4-triazol-1-yl)propan-2-ol,
(II-10) 3-(difluoromethyl)-1-methyl-N-(3',4',5'-trifluorobiphenyl-2-yl)-1H-pyrazole-4-carboxamide, (II-11) 1-[2-({[1-(4-chlorophenyl)-1H-pyrazol-3-yl]oxy}methyl)-3-methylphenyl]-1,4-dihydro-4-methyl-5H-tetrazol-5-one,
(II-12) N-(2-fluorophenyl)-4-[5-(trifluoromethyl)-1,2,4-oxadiazol-3-yl]benzamide
(II-13) (2S,3S)-3-(o-tolyl)butan-2-yl N-{[4-methoxy-3-(propanoyloxy)-2-pyridyl]carbonyl}-L-alaninate,
wherein the weight ratio of compound I to compound II is from 10:1 to 1:10.

The invention also relates to an agrochemical composition comprising the composition and a solvent of solid carrier. Further, the invention relates to a non-therapeutic use of the inventive compositions controlling phytopathogenic harmful fungi.

The compounds I-1 to I-2 defined above for component 1) are herein collectively referred to as "compound of the formula I" or "compounds I". The compounds II-1 to II-13 as defined above for component 2) is herein collectively referred to as "compounds of the formula II" or "compounds II".

The compounds I-1 to I-2 are known from WO 2020/213739, WO 2021/230382. Further, the compound II-8 ia disclosed in WO2014/105845 and WO2022/234487. The compounds II-1 to II-7 and II-9 to II-12 are known from http://www.bcpcpesticidecompendium.org/. The compound II-13 is known from WO 2015/185485, WO 2017/211649 and WO 2013/008162. Compositions are disclosed in e.g. US 2022/0217978, WO 2021/209363, WO 2021/209364, WO 2021/209365, WO 2021/209366, WO 2021/209368, WO 2021/170830.

One typical problem arising in the field of pest control lies in the need to reduce the dosage rates of the active ingredient in order to reduce or avoid unfavorable environmental or toxicological effects whilst still allowing effective pest control.

In regard to the present invention the term pests embrace harmful fungi and animal pests.

Another problem encountered concerns the need to have available pest control agents which are effective against a broad spectrum of harmful fungi and harmful animal pests.

There also exists the need for pest control agents that combine knock-down activity with prolonged control, that is, fast action with long lasting action.

Another difficulty in relation to the use of pesticides is that the repeated and exclusive application of an individual pesticidal compound leads in many cases to a rapid selection of pests, that means animal pests, and harmful fungi, which have developed natural or adapted resistance against the active compounds In question. Therefore, there is a need for pest control agents that help prevent or overcome resistance.

Especially controlling fungicidal diseases in soybeans is a challenge and already now, more than one active ingredient is needed to achieve sufficient activity. It is expected, that in future all products will consist of at least two active ingredients (binary compositions).

Therefore, it is an object of the present invention to provide, with a view to effective resistance management and effective control of phytopathogenic harmful fungi, at application rates which are as low as possible, compositions which, at a reduced total amount of active compounds applied, have improved activity against the harmful fungi (synergistic compositions) and a broadened activity spectrum.

We have accordingly found that this object is achieved by the compositions, defined herein, comprising compounds I and at least one compounds II.

Especially, it has been found that the compositions as defined in the outset show markedly enhanced action against pests compared to the control rates that are possible with the individual compounds and/or is suitable for improving the health of plants when applied to plants, parts of plants, seeds, or at their locus of growth.

Moreover, we have found that simultaneous, that is joint or separate, application of compounds I and compounds II or successive application of compounds I and of compounds II allows better control of harmful fungi than is possible with the individual compounds alone (synergistic compositions). Therefore, the term "composition" in the context of the present invention shall mean a physical composition of the components prior to application or the result of a simultaneous, i.e. joint or separate, application of compounds I and of compounds II on the fungi, their habitat or the seed, the soil or the plants to be protected against fungal attack.

Compounds I and/or the compounds II can be present in different crystal modifications, which may differ in biological activity.

The scope of the present invention includes compositions of the (R)- and (S)-isomers and the racemates of compounds I and/or II having one or more chiral centers. As a result of hindered rotation of asymmetrically substituted groups, atrope isomers of active compounds I and/or II may be present. They also form part of the subject matter of the invention.

Agriculturally acceptable salts of the active compounds I, II encompass especially the salts of those cations or the acid addition salts of those acids whose cations and anions, respectively, have no adverse effect on the fungicidal action of the active compounds. Suitable cations are thus in particular the ions of the alkali metals, preferably sodium and potassium, of the alkaline earth metals, preferably calcium, magnesium and barium, of the transition metals, preferably manganese, copper, zinc and iron, and also the ammonium ion which, if desired, may carry 1 to 4 C₁-C₄-alkyl substituents and/or one phenyl or benzyl substituent, preferably diisopropylammonium, tetramethylammonium, tetrabutylammonium, trimethylbenzylammonium, furthermore phosphonium ions, sulfonium ions, preferably tri(C₁-C₄-alkyl)sulfonium, and sulfoxonium ions, preferably tri(C₁-C₄-alkyl)sulfoxonium. Anions of useful acid addition salts are primarily chloride, bromide, fluoride, hydrogensulfate, sulfate, dihydrogenphosphate, hydrogenphosphate, phosphate, nitrate, bicarbonate, carbonate, hexafluorosilicate, hexafluorophosphate, benzoate, and the anions of C₁-C₄-alkanoic acids, preferably formate, acetate, propionate and butyrate. They can be formed by reacting compounds I with an acid of the corresponding anion, preferably of hydrochloric acid, hydrobromic acid, sulfuric acid, phosphoric acid or nitric acid.

In the binary mixtures the weight ratio of the component 1) and the component 2) generally depends from the properties of the components used, usually it is in the range of from 1:10,000 to 10,000:1, often from 1:100 to 100:1, regularly from 1:50 to 50:1, preferably from 1:20 to 20:1, more preferably from 1:10 to 10:1, even more preferably from 1:4 to 4:1 and in particular from 1:2 to 2:1. According to further embodiments, the weight ratio of the component 1) and the component 2) usually is in the range of from 1000:1 to 1:1, often from 100: 1 to 1:1, regularly from 50:1 to 1:1, preferably from 20:1 to 1:1, more preferably from 10:1 to 1:1, even more preferably from 4:1 to 1:1 and in particular from 2:1 to 1:1. According to further embodiments, the weight ratio of the component 1) and the component 2) usually is in the range of from 20,000:1 to 1:10, often from 10,000:1 to 1:1, regularly from 5,000:1 to 5:1, preferably from 5,000:1 to 10:1, more preferably from 2,000:1 to 30:1, even more preferably from 2,000:1 to 100:1 and in particular from 1,000:1 to 100:1. According to further embodiments, the weight ratio of the component 1) and the component 2) usually is in the range of from 1:1 to 1:1000, often from 1:1 to 1:100, regularly from 1:1 to 1:50, preferably from 1:1 to 1:20, more preferably from 1:1 to 1:10, even more preferably from 1:1 to 1:4 and in particular from 1:1 to 1:2.

According to further embodiments, the weight ratio of the component 1) and the component 2) usually is in the range of from 10:1 to 1:20,000, often from 1:1 to 1:10,000, regularly from 1:5 to 1:5,000, preferably from 1:10 to 1:5,000, more preferably from 1:30 to 1:2,000, even more preferably from 1:100 to 1:2,000 to and in particular from 1:100 to 1:1,000.

According to further embodiments, the compound I and the compound II are usually present in the ratios from 20:1 to 1:20, often from 15:1 to 1:15, more often from 10:1 to 1:10, even more often from 9:1 to 1:9, regularly from 8:1 to 1:8, preferably from 7:1 to 1:7, more preferably from 6:1 to 1:6, even more preferably from 5:1 to 1:5, most preferably from 4:1 to 1:4, especially preferably from 3:1 to 1:3, in particular from 2:1 to 1:2, specifically 1:1.

The compound I and the compound II can be also present in the ratios from 20:1 to 1:1, often from 15:1 to 1:1, more often from 10:1 to 1:1, even more often from 9:1 to 1:1, regularly from 8:1 to 1:1, preferably from 7:1 to 1:1, more preferably from 6:1 to 1:1, even more preferably from 5:1 to 1:1, most preferably from 4:1 to 1:1, especially preferably from 3:1 to 1:1, in particular from 2:1 to 1:1.

The compound I and the compound II can be further present in the ratios from 1:1 to 1:20, often from 1:1 to 1:15, more often from 1:1 to 1:10, even more often from 1:1 to 1:9, regularly from 1:1 to 1:8, preferably from 1:1 to 1:7, more preferably from 1:1 to 1:6, even more preferably from 1:1 to 1:5, most preferably from 1:1 to 1:4, especially preferably from 1:1 to 1:3, in particular from 1:1 to 1:2.

In a preferred aspect the present invention relates to fungicidal compositions M.1 to M.130 that are each identified in one row of table M below, wherein component 1) and component 2) are identified together with their relative amounts (weight ratio).

**Table M**

| Composition | Comp 1) | Comp 2) | Weight ratio Comp 1) to Comp 2) |
|---|---|---|---|
| M.1 | I-1 | II-1 | 5:1 to 1:5 |
| M.2 | I-1 | II-2 | 5:1 to 1:5 |
| M.3 | I-1 | II-3 | 5:1 to 1:5 |
| M.4 | I-1 | II-4 | 5:1 to 1:5 |
| M.5 | I-1 | II-5 | 5:1 to 1:5 |
| M.6 | I-1 | II-6 | 5:1 to 1:5 |
| M.7 | I-1 | II-7 | 5:1 to 1:5 |
| M.8 | I-1 | II-8 | 5:1 to 1:5 |
| M.9 | I-1 | II-9 | 5:1 to 1:5 |
| M.10 | I-1 | II-10 | 5:1 to 1:5 |
| M.11 | I-1 | II-11 | 5:1 to 1:5 |
| M.12 | I-1 | II-12 | 5:1 to 1:5 |
| M.13 | I-1 | II-13 | 5:1 to 1:5 |
| M.14 | I-2 | II-1 | 5:1 to 1:5 |
| M.15 | I-2 | II-2 | 5:1 to 1:5 |
| M.16 | I-2 | II-3 | 5:1 to 1:5 |
| M.17 | I-2 | II-4 | 5:1 to 1:5 |
| M.18 | I-2 | II-5 | 5:1 to 1:5 |
| M.19 | I-2 | II-6 | 5:1 to 1:5 |
| M.20 | I-2 | II-7 | 5:1 to 1:5 |
| M.21 | I-2 | II-8 | 5:1 to 1:5 |
| M.22 | I-2 | II-9 | 5:1 to 1:5 |
| M.23 | I-2 | II-10 | 5:1 to 1:5 |
| M.24 | I-2 | II-11 | 5:1 to 1:5 |
| M.25 | I-2 | II-12 | 5:1 to 1:5 |
| M.26 | I-2 | II-13 | 5:1 to 1:5 |
| M.27 | I-1 | II-1 | 4:1 to 1:4 |
| M.28 | I-1 | II-2 | 4:1 to 1:4 |
| M.29 | I-1 | II-3 | 4:1 to 1:4 |
| M.30 | I-1 | II-4 | 4:1 to 1:4 |
| M.31 | I-1 | II-5 | 4:1 to 1:4 |
| M.32 | I-1 | II-6 | 4:1 to 1:4 |
| M.33 | I-1 | II-7 | 4:1 to 1:4 |
| M.34 | I-1 | II-8 | 4:1 to 1:4 |
| M.35 | I-1 | II-9 | 4:1 to 1:4 |
| M.36 | I-1 | II-10 | 4:1 to 1:4 |
| M.37 | I-1 | II-11 | 4:1 to 1:4 |
| M.38 | I-1 | II-12 | 4:1 to 1:4 |
| M.39 | I-1 | II-13 | 4:1 to 1:4 |
| M.40 | I-2 | II-1 | 4:1 to 1:4 |
| M.41 | I-2 | II-2 | 4:1 to 1:4 |
| M.42 | I-2 | II-3 | 4:1 to 1:4 |
| M.43 | I-2 | II-4 | 4:1 to 1:4 |
| M.44 | I-2 | II-5 | 4:1 to 1:4 |
| M.45 | I-2 | II-6 | 4:1 to 1:4 |
| M.46 | I-2 | II-7 | 4:1 to 1:4 |
| M.47 | I-2 | II-8 | 4:1 to 1:4 |
| M.48 | I-2 | II-9 | 4:1 to 1:4 |
| M.49 | I-2 | II-10 | 4:1 to 1:4 |
| M.50 | I-2 | II-11 | 4:1 to 1:4 |
| M.51 | I-2 | II-12 | 4:1 to 1:4 |
| M.52 | I-2 | II-13 | 4:1 to 1:4 |
| M.53 | I-1 | II-1 | 3:1 to 1:3 |
| M.54 | I-1 | II-2 | 3:1 to 1:3 |
| M.55 | I-1 | II-3 | 3:1 to 1:3 |
| M.56 | I-1 | II-4 | 3:1 to 1:3 |
| M.57 | I-1 | II-5 | 3:1 to 1:3 |
| M.58 | I-1 | II-6 | 3:1 to 1:3 |
| M.59 | I-1 | II-7 | 3:1 to 1:3 |
| M.60 | I-1 | II-8 | 3:1 to 1:3 |
| M.61 | I-1 | II-9 | 3:1 to 1:3 |
| M.62 | I-1 | II-10 | 3:1 to 1:3 |
| M.63 | I-1 | II-11 | 3:1 to 1:3 |
| M.64 | I-1 | II-12 | 3:1 to 1:3 |
| M.65 | I-1 | II-13 | 3:1 to 1:3 |
| M.66 | I-2 | II-1 | 3:1 to 1:3 |
| M.67 | I-2 | II-2 | 3:1 to 1:3 |
| M.68 | I-2 | II-3 | 3:1 to 1:3 |
| M.69 | I-2 | II-4 | 3:1 to 1:3 |
| M.70 | I-2 | II-5 | 3:1 to 1:3 |
| M.71 | I-2 | II-6 | 3:1 to 1:3 |
| M.72 | I-2 | II-7 | 3:1 to 1:3 |
| M.73 | I-2 | II-8 | 3:1 to 1:3 |
| M.74 | I-2 | II-9 | 3:1 to 1:3 |
| M.75 | I-2 | II-10 | 3:1 to 1:3 |
| M.76 | I-2 | II-11 | 3:1 to 1:3 |
| M.77 | I-2 | II-12 | 3:1 to 1:3 |
| M.78 | I-2 | II-13 | 3:1 to 1:3 |
| M.79 | I-1 | II-1 | 2:1 to 1:2 |
| M.80 | I-1 | II-2 | 2:1 to 1:2 |
| M.81 | I-1 | II-3 | 2:1 to 1:2 |
| M.82 | I-1 | II-4 | 2:1 to 1:2 |
| M.83 | I-1 | II-5 | 2:1 to 1:2 |
| M.84 | I-1 | II-6 | 2:1 to 1:2 |
| M.85 | I-1 | II-7 | 2:1 to 1:2 |
| M.86 | I-1 | II-8 | 2:1 to 1:2 |
| M.87 | I-1 | II-9 | 2:1 to 1:2 |
| M.88 | I-1 | II-10 | 2:1 to 1:2 |
| M.89 | I-1 | II-11 | 2:1 to 1:2 |
| M.90 | I-1 | II-12 | 2:1 to 1:2 |
| M.91 | I-1 | II-13 | 2:1 to 1:2 |
| M.92 | I-2 | II-1 | 2:1 to 1:2 |
| M.93 | I-2 | II-2 | 2:1 to 1:2 |
| M.94 | I-2 | II-3 | 2:1 to 1:2 |
| M.95 | I-2 | II-4 | 2:1 to 1:2 |
| M.96 | I-2 | II-5 | 2:1 to 1:2 |
| M.97 | I-2 | II-6 | 2:1 to 1:2 |
| M.98 | I-2 | II-7 | 2:1 to 1:2 |
| M.99 | I-2 | II-8 | 2:1 to 1:2 |
| M.100 | I-2 | II-9 | 2:1 to 1:2 |
| M.101 | I-2 | II-10 | 2:1 to 1:2 |
| M.102 | I-2 | II-11 | 2:1 to 1:2 |
| M.103 | I-2 | II-12 | 2:1 to 1:2 |
| M.104 | I-2 | II-13 | 2:1 to 1:2 |
| M.105 | I-1 | II-1 | 1:1 |
| M.106 | I-1 | II-2 | 1:1 |
| M.107 | I-1 | II-3 | 1:1 |
| M.108 | I-1 | II-4 | 1:1 |
| M.109 | I-1 | II-5 | 1:1 |
| M.110 | I-1 | II-6 | 1:1 |
| M.111 | I-1 | II-7 | 1:1 |
| M.112 | I-1 | II-8 | 1:1 |
| M.113 | I-1 | II-9 | 1:1 |
| M.114 | I-1 | II-10 | 1:1 |
| M.115 | I-1 | II-11 | 1:1 |
| M.116 | I-1 | II-12 | 1:1 |
| M.117 | I-1 | II-13 | 1:1 |
| M.118 | I-2 | II-1 | 1:1 |
| M.119 | I-2 | II-2 | 1:1 |
| M.120 | I-2 | II-3 | 1:1 |
| M.121 | I-2 | II-4 | 1:1 |
| M.122 | I-2 | II-5 | 1:1 |
| M.123 | I-2 | II-6 | 1:1 |
| M.124 | I-2 | II-7 | 1:1 |
| M.125 | I-2 | II-8 | 1:1 |
| M.126 | I-2 | II-9 | 1:1 |
| M.127 | I-2 | II-10 | 1:1 |
| M.128 | I-2 | II-11 | 1:1 |
| M.129 | I-2 | II-12 | 1:1 |
| M.130 | I-2 | II-13 | 1:1 |

Some of the binary compositions and agrochemical compositions thereof according to the invention are systemically effective and they can be used in crop protection as foliar fungicides, fungicides for seed dressing and soil fungicides. Moreover, they are suitable for controlling harmful fungi, which inter alia occur in wood or roots of plants.

The binary compositions and agrochemical compositions thereof according to the invention are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as oilseed rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, oilseed rape, sugar cane or oil palm; corn; tobacco; nuts; coffee; tea; bananas; vines (table grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants.

Preferably, binary compositions and agrochemical compositions thereof according to the invention are used for controlling a multitude of fungi on field crops, such as potatoes sugar beets, tobacco, wheat, rye, barley, oats, rice, corn, cotton, soybeans, oilseed rape, legumes, sunflowers, coffee or sugar cane; fruits; vines; ornamentals; or vegetables, such as cucumbers, tomatoes, beans or squashes.

More preferably, binary compositions and agrochemical compositions thereof according to the invention are used for controlling a multitude of fungi on cereals, corn, fruits, vegetables, rice, soybean, oil rapeseed, nuts, pulses, turf.

Even more preferably, binary compositions and agrochemical compositions thereof according to the invention are used for controlling a multitude of fungi for controlling phytopathogenic harmful fungi on wheat, barley, tomato, potato, grapes, apple, cucumber, melon, tree nuts, banana, citrus, soybean, rice, canola, corn, turf.

According one preferred embodiment of the invention, the compositions M.1 to M.130 are used for controlling phytopathogenic harmful fungi on wheat.

According one preferred embodiment of the invention, the compositions M.1 to M.130 are used for controlling phytopathogenic harmful fungi on barley.

According one preferred embodiment of the invention, the compositions M.1 to M.130 are used for controlling phytopathogenic harmful fungi on tomato.

According one preferred embodiment of the invention, the compositions M.1 to M.130 are used for controlling phytopathogenic harmful fungi on potato.

According one preferred embodiment of the invention, the compositions M.1 to M.130 are used for controlling phytopathogenic harmful fungi on grapes.

According one preferred embodiment of the invention, the compositions M.1 to M.130 are used for controlling phytopathogenic harmful fungi on apple.

According one preferred embodiment of the invention, the compositions M.1 to M.130 are used for controlling phytopathogenic harmful fungi on cucumber.

According one preferred embodiment of the invention, the compositions M.1 to M.130 are used for controlling phytopathogenic harmful fungi on melon.

According one preferred embodiment of the invention, the compositions M.1 to M.130 are used for controlling phytopathogenic harmful fungi on tree nuts.

According one preferred embodiment of the invention, the compositions M.1 to M.130 are used for controlling phytopathogenic harmful fungi on banana.

According one preferred embodiment of the invention, the compositions M.1 to M.130 are used for controlling phytopathogenic harmful fungi on citrus.

According one preferred embodiment of the invention, the compositions M.1 to M.130 are used for controlling phytopathogenic harmful fungi on soybean.

According one preferred embodiment of the invention, the compositions M.1 to M.130 are used for controlling phytopathogenic harmful fungi on rice.

According one preferred embodiment of the invention, the compositions M.1 to M.130 are used for controlling phytopathogenic harmful fungi on canola.

According one preferred embodiment of the invention, the compositions M.1 to M.130 are used for controlling phytopathogenic harmful fungi on corn.

According one preferred embodiment of the invention, the compositions M.1 to M.130 are used for controlling phytopathogenic harmful fungi on turf.

Preferably, the binary compositions and agrochemical compositions thereof according to the invention are used for controlling the following causal agents of plant diseases:
*Albugo* spp. (white rust) on ornamentals, vegetables (e.g. *A*. *candida*) and sunflowers (e.g. *A*. *tragopogonis*); *Alternaria* spp. (Alternaria leaf spot) on vegetables (e.g. *A*. *dauci* or A. *porri*)*,* oilseed rape (*A*. *brassicicola* or *brassicae*), sugar beets (*A*. *tenuis*)*,* fruits (e.g. *A*. *grandis*), rice, soybeans, potatoes and tomatoes (e.g. *A*. *solani, A. grandis* or *A*. *alternata*), tomatoes (e.g. *A*. *solani* or *A*. *alternata*) and wheat (e.g. *A*. *triticina*); *Aphanomyces* spp. on sugar beets and vegetables; *Ascochyta* spp. on cereals and vegetables, e.g. *A*. *tritici* (anthracnose) on wheat and *A*. *hordeí* on barley; *Aureobasidium zeae* (syn. *Kapatiella* zeae) on corn; *Bipolaris* and *Drechslera* spp. (teleomorph: *Cochliobolus* spp.), e.g. Southern leaf blight (*D. maydis*) or Northern leaf blight (*B*. *zeicola*) on corn, e.g. spot blotch (*B. sorokiniana*) on cereals and e.g. *B*. *oryzae* on rice and turfs; *Blumeria* (formerly *Erysiphe*) *graminis* (powdery mildew) on cereals (e.g. on wheat or barley); *Botrytis cinerea* (teleomorph: *Botryotinia fuckeliana:* grey mold) on fruits and berries (e.g. strawberries), vegetables (e.g. lettuce, carrots, celery and cabbages); *B*. *squamosa* or *B*. *allii* on onion family), oilseed rape, ornamentals (e.g. *B eliptica*), vines, forestry plants and wheat; *Bremia lactucae* (downy mildew) on lettuce; *Ceratocystis* (syn. *Ophiostoma*) spp. (rot or wilt) on broad-leaved trees and evergreens, e.g. *C*. *ulmi* (Dutch elm disease) on elms; *Cercospora* spp. (Cercospora leaf spots) on corn (e.g. Gray leaf spot: *C*. zeae-*maydis*), rice, sugar beets (e.g. *C*. *beticola*), sugar cane, vegetables, coffee, soybeans (e.g. *C. sojina* or *C*. *kikuchii*) and rice; *Cladobotryum (syn. Dactylium)* spp. (e.g. *C. mycophilum*
(formerly *Dactylium dendroides,* teleomorph: *Nectria albertinii, Nectria rosella* syn. *Hypomyces rosellus)* on mushrooms; *Cladosporium* spp. on tomatoes (e.g. *C. fulvum*: leaf mold) and cereals, e.g. *C. herbarum* (black ear) on wheat; *Claviceps purpurea* (ergot) on cereals; *Cochliobolus* (anamorph: *Helminthosporium* of *Bipolaris*) spp. (leaf spots) on corn (*C*. *carbonum*), cereals (e.g. *C*. *sativus,* anamorph: *B. sorokiniana*) and rice (e.g. *C*. *miyabeanus,* anamorph: *H. oryzae*); *Colletotrichum* (teleomorph: *Glomerella*) spp. (anthracnose) on cotton (e.g. *C. gossypii*)*,* corn (e.g. *C. graminicola:* Anthracnose stalk rot), soft fruits, potatoes (e.g. *C*. *coccodes*: black dot), beans (e.g. *C*. *lindemuthianum*), soybeans (e.g. *C*. *truncatum* or *C*. *gloeosporioides*)*,* vegetables (e.g. *C. lagenarium* or *C*. *capsici*)*,* fruits (e.g. *C*. *acutatum*), coffee (e.g. *C. coffeanum* or *C. kahawae*) and *C*. *gloeosporioides* on various crops; *Corticium* spp., e.g. *C*. *sasakii* (sheath blight) on rice; *Corynespora cassiicola* (leaf spots) on soybeans, cotton and ornamentals; *Cycloconium* spp., e.g. *C. oleaginum* on olive trees; *Cylindrocarpon* spp. (e.g. fruit tree canker or young vine decline, teleomorph: *Nectria* or *Neonectria* spp.) on fruit trees, vines (e.g. *C. liriodendri,* teleomorph: *Neonectria liriodendri*: Black Foot Disease) and ornamentals; *Dematophora* (teleomorph: *Rosellinia*) *necatrix* (root and stem rot) on soybeans; *Diaporthe* spp., e.g. *D. phaseolorum* (damping off) on soybeans; *Drechslera* (syn. *Helminthosporium,* teleomorph: *Pyrenophora*) spp. on corn, cereals, such as barley (e.g. *D*. *teres,* net blotch) and wheat (e.g. *D*. *tritici-repentis*: tan spot), rice and turf; Esca (dieback, apoplexy) on vines, caused by *Formitiporia* (syn. *Phellinus*) *punctata, F. mediterranea, Phaeomoniella chlamydospora* (formerly *Phaeoacremonium chlamydosporum*), *Phaeoacremonium aleophilum* and/or *Botryosphaeria obtusa*; *Elsinoe* spp. on pome fruits (*E. pyri*)*,* soft fruits (*E. veneta*: anthracnose) and vines (*E. ampelina*: anthracnose); *Entyloma oryzae* (leaf smut) on rice; *Epicoccum* spp. (black mold) on wheat; *Erysiphe* spp. (powdery mildew) on sugar beets (*E. betae*), vegetables (e.g. *E. pisi*)*,* such as cucurbits (e.g. *E*. *cichoracearum*), cabbages, oilseed rape (e.g. *E. cruciferarum*); *Eutypa lata* (Eutypa canker or dieback, anamorph: *Cytosporina lata,* syn. *Libertella blepharis*) on fruit trees, vines and ornamental woods; *Exserohilum* (syn. *Helminthosporium*) spp. on corn (e.g. *E. turcicum*); *Fusarium* (teleomorph: Gibberella) spp. (wilt, root or stem rot) on various plants, such as *F. graminearum* or *F. culmorum* (root rot, scab or head blight) on cereals (e.g. wheat or barley), *F*. *oxysporum* on tomatoes, *F. solani* (f. sp. *glycines* now syn. *F. virguliforme* ) and *F. tucumaniae* and *F. brasiliense* each causing sudden death syndrome on soybeans, and *F. verticillioides* on corn; *Gaeumannomyces graminis* (take-all) on cereals (e.g. wheat or barley) and corn; *Gibberella* spp. on cereals (e.g. *G*. *zeae*) and rice (e.g. *G. fujikuroi*: Bakanae disease); *Glomerella cingulata* on vines, pome fruits and other plants and *G. gossypii* on cotton; Grain-staining complex on rice; *Guignardia bidwellii* (black rot) on vines; *Gymnosporangium* spp. on rosaceous plants and junipers, e.g. *G*. *sabinae* (rust) on pears; *Helminthosporium* spp. (syn. Drechslera, teleomorph: *Cochliobolus*) on corn, cereals, potatoes and rice; *Hemileia* spp., e.g. *H. vastatrix* (coffee leaf rust) on coffee; *Isariopsis clavispora* (syn. *Cladosporium vitis*) on vines; *Macrophomina phaseolina* (syn. *phaseoli*) (root and stem rot) on soybeans and cotton; *Microdochium* (syn. *Fusarium*) *nivale* (pink snow mold) on cereals (e.g. wheat or barley); *Microsphaera diffusa* (powdery mildew) on soybeans; *Monilinia* spp., e.g. *M*. *laxa, M. fructicola* and *M*. *fructigena* (syn. *Monilia* spp.: bloom and twig blight, brown rot) on stone fruits and other rosaceous plants; *Mycosphaerella* spp. on cereals, bananas, soft fruits and ground nuts, such as e.g. *M. graminicola* (anamorph: *Zymoseptoria tritici* formerly *Septoria tritici*: Septoria blotch) on wheat or *M*. *fijiensis* (syn. *Pseudocercospora fijiensis:* black Sigatoka disease) and *M*. *musicola* on bananas, *M*. *arachidicola* (syn. *M. arachidis* or *Cercospora arachidis*), *M. berkeleyí* on peanuts, *M. pisi* on peas and *M*. *brassiciola* on brassicas; *Peronospora* spp. (downy mildew) on cabbage (e.g. *P. brassicae*), oilseed rape (e.g. *P. parasitica*), onions (e.g. *P. destructor),* tobacco (*P. tabacina*) and soybeans (e.g. *P. manshurica*); *Phakopsora pachyrhizi* and *P. meibomiae* (soybean rust) on soybeans; *Phialophora* spp. e.g. on vines (e.g. *P*. *tracheiphila* and *P. tetraspora*) and soybeans (e.g. *P. gregata*: stem rot); *Phoma lingam* (syn. *Leptosphaeria biglobosa* and *L. maculans*: root and stem rot) on oilseed rape and cabbage, *P. betae* (root rot, leaf spot and damping-off) on sugar beets and *P. zeae-maydis* (syn. *Phyllostica zeae*) on corn; *Phomopsis* spp. on sunflowers, vines (e.g. *P. viticola*: can and leaf spot) and soybeans (e.g. stem rot: *P. phaseoli,* teleomorph: *Diaporthe phaseolorum); Physoderma maydis* (brown spots) on corn; *Phytophthora* spp. (wilt, root, leaf, fruit and stem root) on various plants, such as paprika and cucurbits (e.g. *P. capsici*)*,* soybeans (e.g. *P. megasperma,* syn. *P. sojae*), potatoes and tomatoes (e.g. *P. infestans*: late blight) and broad-leaved trees (e.g. *P. ramorum*: sudden oak death); *Plasmodiophora brassicae* (club root) on cabbage,oilseed rape, radish and other plants; *Plasmopara* spp., e.g. *P*. *viticola* (grapevine downy mildew) on vines and *P. halstedii* on sunflowers; *Podosphaera* spp. (powdery mildew) on rosaceous plants, hop, pome and soft fruits (e.g. *P. leucotricha* on apples) and curcurbits (*P. xanthii*); *Polymyxa* spp., e.g. on cereals, such as barley and wheat (*P. graminis*) and sugar beets (*P. betae*) and thereby transmitted viral diseases; *Pseudocercosporella herpotrichoides* (syn. *Oculimacula yallundae, O. acuformis*: eyespot, teleomorph: *Tapesia yallundae*) on cereals, e.g. wheat or barley; *Pseudoperonospora* (downy mildew) on various plants, e.g. *P*. *cubensis* on cucurbits or *P. humili* on hop; *Pseudopezicula tracheiphila* (red fire disease or ,rotbrenner', anamorph: *Phialophora*) on vines; *Puccinia* spp. (rusts) on various plants, e.g. *P. triticina* (brown or leaf rust), *P. striiformis* (stripe or yellow rust), *P. hordei* (dwarf rust), *P. graminis* (stem or black rust) or *P. recondita* (brown or leaf rust) on cereals, such as e.g. wheat, barley or rye, *P. kuehnii* (orange rust) on sugar cane and *P. asparagi* on asparagus; *Pyrenopeziza spp.,* e.g. *P. brassicae* on oilseed rape; *Pyrenophora* (anamorph: *Drechslera*) *tritici-repentis* (tan spot) on wheat or *P. teres* (net blotch) on barley; *Pyricularia* spp., e.g. *P. oryzae* (teleomorph: *Magnaporthe grisea*: rice blast) on rice and *P. grisea* on turf and cereals; *Pythium* spp. (damping-off) on turf, rice, corn, wheat, cotton, oilseed rape, sunflowers, soybeans, sugar beets, vegetables and various other plants (e.g. *P. ultimum* or *P. aphani-dermatum*) and *P. oligandrum* on mushrooms; *Ramularia* spp., e.g. *R. collo-cygni* (Ramularia leaf spots, Physiological leaf spots) on barley, *R. areola* (teleomorph: *Mycosphaerella areola*) on cotton and *R. beticola* on sugar beets; *Rhizoctonia* spp. on cotton, rice, potatoes, turf, corn, oilseed rape, potatoes, sugar beets, vegetables and various other plants, e.g. *R. solani* (root and stem rot) on soybeans, *R. solani* (sheath blight) on rice or *R. cerealis* (Rhizoctonia spring blight) on wheat or barley; *Rhizopus stolonifer* (black mold, soft rot) on strawberries, carrots, cabbage, vines and tomatoes; *Rhynchosporium secalis* and *R. commune* (scald) on barley, rye and triticale; *Sarocladium oryzae* and S. *attenuatum* (sheath rot) on rice; *Sclerotinia* spp. (stem rot or white mold) on vegetables (*S. minor and S. sclerotiorum*) and field crops, such as oilseed rape, sunflowers (e.g. *S. sclerotiorum*) and soybeans, *S. rolfsii* (syn. *Athelia rolfsii*) on soybeans, peanut, vegetables, corn, cereals and ornamentals; *Septoria* spp. on various plants, e.g. *S. glycines* (brown spot) on soybeans, *S*. *tritici* (syn. *Zymoseptoria tritici,* Septoria blotch) on wheat and *S*. (syn. *Stagonospora*) *nodorum* (Stagonospora blotch) on cereals; *Uncinula* (syn. *Erysiphe*) *necator* (powdery mildew, anamorph: *Oidium tuckeri*) on vines; *Setosphaeria* spp. (leaf blight) on corn (e.g. *S. turcicum,* syn. *Helminthosporium turcicum*) and turf; *Sphacelotheca* spp. (smut) on corn, (e.g. *S. reiliana,* syn. *Ustilago reiliana*: head smut), sorghum und sugar cane; *Sphaerotheca fuliginea* (syn. *Podosphaera xanthii*: powdery mildew) on cucurbits; *Spongospora subterranea* (powdery scab) on potatoes and thereby transmitted viral diseases; *Stagonospora* spp. on cereals, e.g. *S. nodorum* (Stagonospora blotch, teleomorph: *Leptosphaeria* [syn. *Phaeosphaeria*] *nodorum,* syn. *Septoria nodorum*) on wheat; *Synchytrium endobioticum* on potatoes (potato wart disease); *Taphrina* spp., e.g. *T. deformans* (leaf curl disease) on peaches and *T. pruni* (plum pocket) on plums; *Thielaviopsis* spp. (black root rot) on tobacco, pome fruits, vegetables, soybeans and cotton, e.g. *T. basicola* (syn. *Chalara elegans*); *Tilletia* spp. (common bunt or stinking smut) on cereals, such as e.g. *T. tritici* (syn. *T. caries,* wheat bunt) and *T. controversa* (dwarf bunt) on wheat; *Trichoderma harzianum on mushrooms; Typhula incarnata* (grey snow mold) on barley or wheat; *Urocystis* spp., e.g. *U. occulta* (stem smut) on rye; *Uromyces* spp. (rust) on vegetables, such as beans (e.g. *U. appendiculatus,* syn. *U. phaseoli*), sugar beets (e.g. *U. betae* or *U. beticola*) and on pulses (e.g. *U. vignae, U. pisi, U. viciae-fabae* and *U. fabae*); *Ustilago* spp. (loose smut) on cereals (e.g. *U. nuda* and *U. avaenae*), corn (e.g. *U. maydis*: corn smut) and sugar cane; *Venturia* spp. (scab) on apples (e.g. *V. inaequalis*) and pears; and *Verticillium* spp. (wilt) on various plants, such as fruits and ornamentals, vines, soft fruits, vegetables and field crops, e.g. *V. longisporum* on oilseed rape, *V. dahliae* on strawberries, oilseed rape, potatoes and tomatoes, and *V. fungicola* on mushrooms; *Zymoseptoria tritici* on cereals.

More preferably, binary compositions and agrochemical compositions thereof according to the invention are used for controlling the following causal agents of plant diseases:
*Fusarium graminearum, SZymoseptoria tritici, Septoria nodorum synonym Parastagonospora nodorum, Puccinia striiformis, Puccinia recondita, Blumeria graminis f.sp.tritici, Pyrenophora teres, Pyrenophora graminea, Alternaria spp., Leptosphaeria maculans, Erysiphe graminis, Puccinia hordei, Rhynchosporium secalis, Cercospora spp. like Cercospora beticola, C. sojina, C. kikuchii, C. zea-maydis, Podosphaera fuligena, Podospheara xanthii, Colletotrichum spp. like C. graminicola, C. sojae aka C. truncatum, C. orbiculare aka C. lagenarium, Sclerotinia sclerotiorum.*

According one preferred embodiment of the invention, the compositions M.1 to M.130 are used for controlling of *Fusarium graminearum.*

According one preferred embodiment of the invention, the compositions M.1 to M.130 are used for controlling of *Zymoseptoria tritici.*

According one preferred embodiment of the invention, the compositions M.1 to M.130 are used for controlling of *Septoria nodorum synonym Parastagonospora nodorum.*

According one preferred embodiment of the invention, the compositions M.1 to M.130 are used for controlling of *Puccinia striiformis.*

According one preferred embodiment of the invention, the compositions M.1 to M.130 are used for controlling of *Puccinia recondita.*

According one preferred embodiment of the invention, the compositions M.1 to M.130 are used for controlling of *Blumeria graminis f.sp.triticí.*

According one preferred embodiment of the invention, the compositions M.1 to M.130 are used for controlling of *Pyrenophora teres.*

According one preferred embodiment of the invention, the compositions M.1 to M.130 are used for controlling of *Pyrenophora graminea.*

According one preferred embodiment of the invention, the compositions M.1 to M.130 are used for controlling of *Alternaria spp..*

According one preferred embodiment of the invention, the compositions M.1 to M.130 are used for controlling of *Leptosphaeria maculans.*

According one preferred embodiment of the invention, the compositions M.1 to M.130 are used for controlling of *Erysiphe graminis.*

According one preferred embodiment of the invention, the compositions M.1 to M.130 are used for controlling of *Puccinia hordei.*

According one preferred embodiment of the invention, the compositions M.1 to M.130 are used for controlling of *Rhynchosporium secalis.*

According one preferred embodiment of the invention, the compositions M.1 to M.130 are used for controlling of *Cercospora spp. like Cercospora beticola, C. sojina, C. kikuchii, C*. *zea-maydis.*

According one preferred embodiment of the invention, the compositions M.1 to M.130 are used for controlling of *Podosphaera fuligena.*

According one preferred embodiment of the invention, the compositions M.1 to M.130 are used for controlling of *Podospheara xanthii.*

According one preferred embodiment of the invention, the compositions M.1 to M.130 are used for controlling of *Colletotrichum spp. like C. graminicola, C. sojae aka C. truncatum, C. orbiculare aka C. lagenarium.*

According one preferred embodiment of the invention, the compositions M.1 to M.130 are used for controlling of *Sclerotinia sclerotiorum.*

In one aspect of the present invention the amount of compounds I-1 in compositions M.1 to M.130 is in the range between 40 and 200 g/ha, preferably between 60 and 120 g/ha, more preferably 100 g/ha.

The binary compositions and agrochemical compositions thereof according to the invention can, in the use form as fungicides, also be present together with further active substances, e. g. with herbicides, insecticides, growth regulators, fungicides or else with fertilizers, as pre-mix or, if appropriate, not until immediately prior to use (tank mix).

Mixing the active compounds I, II and the compositions comprising the compositions, respectively, in the use form as fungicides with other fungicides results in many cases in an expansion of the fungicidal spectrum of activity being obtained or in a prevention of fungicide resistance development. Furthermore, in many cases, synergistic effects are obtained.

The binary compositions according to the invention can be converted into customary types of agrochemical compositions, e. g. solutions, emulsions, suspensions, dusts, powders, pastes, granules, pressings, capsules, and compositions thereof. Examples for composition types are suspensions (e. g. SC, OD, FS), emulsifiable concentrates (e. g. EC), emulsions (e. g. EW, EO, ES, ME), capsules (e. g. CS, ZC), pastes, pastilles, wettable powders or dusts (e. g. WP, SP, WS, DP, DS), pressings (e. g. BR, TB, DT), granules (e. g. WG, SG, GR, FG, GG, MG), insecticidal articles (e. g. LN), as well as gel formulations for the treatment of plant propagation materials such as seeds (e. g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

The binary compositions of active compounds described herein can be prepared as compositions comprising besides the active ingredients at least one inert ingredient (auxiliary) by usual means, e. g. by the means given herein for the compositions of compounds I. Concerning usual ingredients of such compositions reference is made to the explanations given for the compositions containing compounds I.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

The agrochemical compositions generally comprise between 0.01 and 95%, preferably between 0.1 and 90%, more preferably between 1 and 70%, and in particular between 10 and 60%, by weight of active substance. The active substances are employed in a purity of from 90% to 100%, preferably from 95% to 100% (according to NMR spectrum).

For the purposes of treatment of plant propagation materials, particularly seeds, solutions for seed treatment (LS), Suspoemulsions (SE), flowable concentrates (FS), powders for dry treatment (DS), water-dispersible powders for slurry treatment (WS), water-soluble powders (SS), emulsions (ES), emulsifiable concentrates (EC), and gels (GF) are usually employed. The compositions in question give, after two-to-tenfold dilution, active compound concentrations of from 0.01 to 60% by weight, preferably from 0.1 to 40%, in the ready-to-use preparations. Application can be carried out before or during sowing. Methods for applying compounds I and compositions thereof, respectively, onto plant propagation material, especially seeds, include dressing, coating, pelleting, dusting, and soaking as well as in-furrow application methods. Preferably, binary composition according to the invention or the compositions thereof, respectively, are applied on to the plant propagation material by a method such that germination is not induced, e. g. by seed dressing, pelleting, coating and dusting.

When employed in plant protection, the amounts of active substances applied are, depending on the kind of effect desired, from 0.001 to 2 kg per ha, preferably from 0.005 to 2 kg per ha, more preferably from 0.05 to 0.9 kg per ha, and in particular from 0.1 to 0.75 kg per ha.

In treatment of plant propagation materials such as seeds, e. g. by dusting, coating or drenching seed, amounts of active compound of from 0.1 to 1000 g, preferably from 1 to 1000 g, more preferably from 1 to 100 g and most preferably from 5 to 100 g, per 100 kilogram of plant propagation material (preferably seeds) are generally required.

When used in the protection of materials or stored products, the amount of active compound applied depends on the kind of application area and on the desired effect. Amounts customarily applied in the protection of materials are 0.001 g to 2 kg, preferably 0.005 g to 1 kg, of active compound per cubic meter of treated material.

By applying binary composition according to the invention a synergistic effect can be obtained, i.e. more than simple addition of the individual effects is obtained (synergistic compositions).

This can be obtained by applying the binary composition according to the invention either jointly (e. g. as tank-mix) or separately, or in succession, wherein the time interval between the individual applications is selected to ensure that the active compound applied first still occurs at the site of action in a sufficient amount at the time of application of the further active substance(s). The order of application is not essential for working of the present invention.

When applying binary composition according to the invention sequentially the time between both applications may vary e. g. between 2 hours to 7 days. Also a broader range is possible ranging from 0.25 hour to 30 days, preferably from 0.5 hour to 14 days, particularly from 1 hour to 7 days or from 1.5 hours to 5 days, even more preferred from 2 hours to 1 day.

### Biological tests

### Microtest

The active compounds were formulated separately as a stock solution having a concentration of 10000 ppm in dimethyl sulfoxide.

The stock solutions were mixed according to the ratio, pipetted onto a micro titer plate (MTP) and diluted with water to the stated concentrations.

### Example 1 - Activity against the Cercospora sojina in the microtiterplate test

A spore suspension of *Cercospora sojina* in an aqueous biomalt or yeast-bactopeptone-sodiumacetate solution was then added.

The plates were placed in a water vapor-saturated chamber at a temperature of 18°C. Using an absorption photometer, the MTPs were measured at 405 nm 7 days after the inoculation.

The measured parameters were compared to the growth of the active compound-free control variant (100%) and the fungus-free blank value to determine the relative growth in % of the pathogens in the respective active compounds. These percentages were converted into efficacies.

An efficacy of 0 means that the growth level of the pathogens corresponds to that of the untreated control; an efficacy of 100 means that the pathogens were not growing.

The expected efficacies of active compound mixtures were determined using Colby's formula [R.S. Colby, "Calculating synergistic and antagonistic responses of herbicide combinations", Weeds 15, 20-22 (1967)] and compared with the observed efficacies.

| **Active compound / active mixture** | **Concentration (ppm)** | **Mixture** | **Observed efficacy** | **Calculated efficacy according to Colby (%)** |
|---|---|---|---|---|
| (I-1) | 0.25 | - | 35 | |
| (II-1) | 0.063 | - | 19 | |
| (I-1) | 0.25 | 4 : 1 | 66 | 47 |
| (II-1) | 0.063 | | | |

### Example 2 - Activity against Colletotrichum orbiculare in the microtiterplate test

A spore suspension of *Colletotrichum orbiculare* in an aqueous biomalt or yeast-bactopeptone-glycerine or DOB solution was then added.

The plates were placed in a water vapor-saturated chamber at a temperature of 18°C. Using an absorption photometer, the MTPs were measured at 405 nm 7 days after the inoculation.

The measured parameters were compared to the growth of the active compound-free control variant (100%) and the fungus-free blank value to determine the relative growth in % of the pathogens in the respective active compounds. These percentages were converted into efficacies.

An efficacy of 0 means that the growth level of the pathogens corresponds to that of the untreated control; an efficacy of 100 means that the pathogens were not growing.

The expected efficacies of active compound mixtures were determined using Colby's formula [R.S. Colby, "Calculating synergistic and antagonistic responses of herbicide combinations", Weeds 15, 20-22 (1967)] and compared with the observed efficacies.

| **Active compound / active mixture** | **Concentration (ppm)** | **Mixture** | **Observed efficacy** | **Calculated efficacy according to Colby (%)** |
|---|---|---|---|---|
| (I-1) | 0.063 | - | 26 | |
| | 0.008 | - | 13 | |
| (II-2) | 0.016 | - | 57 | |
| (I-1) | 0.063 | 4 : 1 | 99 | 68 |
| (II-2) | 0.016 | | | |
| (I-1) | 0.008 | 1 : 2 | 85 | 62 |
| (II-2) | 0.016 | | | |

### Example 3 - Activity against Sclerotinia sclerotiorum in the microtiterplate test

A spore suspension of *Sclerotinia sclerotiorum in* an aqueous biomalt or yeast-bactopeptone-glycerine or DOB solution was then added.

The plates were placed in a water vapor-saturated chamber at a temperature of 18°C. Using an absorption photometer, the MTPs were measured at 405 nm 7 days after the inoculation.

The measured parameters were compared to the growth of the active compound-free control variant (100%) and the fungus-free blank value to determine the relative growth in % of the pathogens in the respective active compounds. These percentages were converted into efficacies. An efficacy of 0 means that the growth level of the pathogens corresponds to that of the untreated control; an efficacy of 100 means that the pathogens were not growing.

The expected efficacies of active compound mixtures were determined using Colby's formula [R.S. Colby, "Calculating synergistic and antagonistic responses of herbicide combinations", Weeds 15, 20-22 (1967)] and compared with the observed efficacies.

| **Active compound / active mixture** | **Concentration (ppm)** | **Mixture** | **Observed efficacy** | **Calculated efficacy according to Colby (%)** |
|---|---|---|---|---|
| (I-1) | 1 | - | 16 | |
| | 0.5 | - | 3 | |
| | 0.25 | - | 5 | |
| | 0.008 | - | 0 | |
| (II-2) | 0.063 | - | 63 | |
| | 0.016 | - | 36 | |
| (II-12) | 4 | - | 10 | |
| | 0.5 | - | 0 | |
| | 0.25 | - | 0 | |
| (II-9) | 0.5 | - | 37 | |
| Sulfur | 1 | - | 0 | |
| | 0.5 | - | 3 | |
| (I-1) | 0.25 | 4 : 1 | 83 | 64 |
| (II-2) | 0.063 | | | |
| (I-1) | 0.008 | 1 : 2 | 50 | 36 |
| (II-2) | 0.016 | | | |
| (I-1) | 1 | 4: 1 | 35 | 16 |
| (II-12) | 0.25 | | | |
| (I-1) | 1 | 2 : 1 | 36 | 16 |
| (II-12) | 0.5 | | | |
| (I-1) | 1 | 1 : 4 | 51 | 24 |
| (II-12) | 4 | | | |
| (I-1) | 1 | 2 : 1 | 77 | 47 |
| (II-9) | 0.5 | | | |
| (I-1) | 1 | 2 : 1 | 35 | 18 |
| (II-3) | 0.5 | | | |
| (I-1) | 0.5 | 1 : 2 | 35 | 3 |
| (II-3) | 1 | | | |

### Example 4 - Activity against Alternaria solani in the microtiterplate test

A spore suspension of *Alternaria solani in* an aqueous biomalt or yeast-bactopeptone-glycerine or DOB solution was then added.

The plates were placed in a water vapor-saturated chamber at a temperature of 18°C. Using an absorption photometer, the MTPs were measured at 405 nm 7 days after the inoculation.

The measured parameters were compared to the growth of the active compound-free control variant (100%) and the fungus-free blank value to determine the relative growth in % of the pathogens in the respective active compounds. These percentages were converted into efficacies.

An efficacy of 0 means that the growth level of the pathogens corresponds to that of the untreated control; an efficacy of 100 means that the pathogens were not growing.

The expected efficacies of active compound mixtures were determined using Colby's formula [R.S. Colby, "Calculating synergistic and antagonistic responses of herbicide combinations", Weeds 15, 20-22 (1967)] and compared with the observed efficacies.

| **Active compound / active mixture** | **Concentration (ppm)** | **Mixture** | **Observed efficacy** | **Calculated efficacy according to Colby (%)** |
|---|---|---|---|---|
| (I-1) | 0.063 | - | 30 | |
| | 0.125 | - | 37 | |
| | 0.016 | - | 8 | |
| (II-12)(II-12) | 0.25 | - | 0 | |
| (II-5) | 0.25 | - | 37 | |
| (II-9) (II-9) | 0.032 | - | 48 | |
| (II-1) (II-1) | 0.008 | - | 18 | |
| (II-3) (II-3) | 0.25 | - | 0 | |
| (I-1) | 0.063 | 1 : 4 | 55 | 30 |
| (II-12) | 0.25 | | | |
| (I-1) | 0.063 | 1 : 4 | 94 | 56 |
| (II-5) | 0.25 | | | |
| (I-1) | 0.063 | 2 : 1 | 94 | 64 |
| (II-9) | 0.032 | | | |
| (I-1) | 0.016 | 2 : 1 | 45 | 24 |
| (II-1) | 0.008 | | | |
| (I-1) | 0.125 | 1 : 2 | 86 | 37 |
| (II-3) | 0.25 | | | |

### Example 5 - Activity against Cercospora zea maydis in the microtiterplate test

A spore suspension of *Cercospora zea maydis in* an aqueous biomalt or yeast-bactopeptone-glycerine or DOB solution was then added.

The plates were placed in a water vapor-saturated chamber at a temperature of 18°C. Using an absorption photometer, the MTPs were measured at 405 nm 7 days after the inoculation.

The measured parameters were compared to the growth of the active compound-free control variant (100%) and the fungus-free blank value to determine the relative growth in % of the pathogens in the respective active compounds. These percentages were converted into efficacies.

An efficacy of 0 means that the growth level of the pathogens corresponds to that of the untreated control; an efficacy of 100 means that the pathogens were not growing.

The expected efficacies of active compound mixtures were determined using Colby's formula [R.S. Colby, "Calculating synergistic and antagonistic responses of herbicide combinations", Weeds 15, 20-22 (1967)] and compared with the observed efficacies.

| **Active compound / active mixture** | **Concentration (ppm)** | **Mixture** | **Observed efficacy** | **Calculated efficacy according to Colby (%)** |
|---|---|---|---|---|
| (I-1) | 0.016 | - | 30 | |
| | 0.002 | - | 11 | |
| (II-9) | 0.004 | - | 0 | |
| (II-3) | 0.063 | - | 0 | |
| (I-1) | 0.016 | 4 : 1 | 96 | 30 |
| (II-9) | 0.004 | | | |
| (I-1) | 0.002 | 1 : 2 | 96 | 11 |
| (II-9) | 0.004 | | | |
| (I-1) | 0.016 | 1 : 4 | 93 | 35 |
| (II-3) | 0.063 | | | |

### Example 6 - Activity against Pyrenophora teres in the microtiterplate test

A spore suspension of *Pyrenophora teres in* an aqueous biomalt or yeast-bactopeptone-glycerine or DOB solution was then added.

The plates were placed in a water vapor-saturated chamber at a temperature of 18°C. Using an absorption photometer, the MTPs were measured at 405 nm 7 days after the inoculation.

The measured parameters were compared to the growth of the active compound-free control variant (100%) and the fungus-free blank value to determine the relative growth in % of the pathogens in the respective active compounds. These percentages were converted into efficacies.

An efficacy of 0 means that the growth level of the pathogens corresponds to that of the untreated control; an efficacy of 100 means that the pathogens were not growing.

The expected efficacies of active compound mixtures were determined using Colby's formula [R.S. Colby, "Calculating synergistic and antagonistic responses of herbicide combinations", Weeds 15, 20-22 (1967)] and compared with the observed efficacies.

| **Active compound / active mixture** | **Concentration (ppm)** | **Mixture** | **Observed efficacy** | **Calculated efficacy according to Colby (%)** |
|---|---|---|---|---|
| (I-1) | 0.25 | - | 0 | |
| | 0.063 | - | 0 | |
| (II-6) | 0.25 | - | 36 | |
| (II-2) (II-2) | 0.063 | - | 25 | |
| | 0.032 | - | 5 | |
| (II-4) | 0.25 | - | 15 | |
| (I-1) | 0.063 | 1 : 4 | 59 | 36 |
| (II-6) | 0.25 | | | |
| (I-1) | 0.063 | 2 : 1 | 34 | 5 |
| (II-2) | 0.032 | | | |
| (I-1) | 0.25 | 4 : 1 | 47 | 25 |
| (II-2) | 0.063 | | | |
| (I-1) | 0.063 | 1 : 4 | 37 | 15 |
| (II-4) | 0.25 | | | |

## Claims

1. A fungicidal composition comprising as active component 1)
(I-1) methyl 2-[2-chloro-4-(4-chlorophenoxy)phenyl]-2-hydroxy-3-(1,2,4-triazol-1-yl)propanoate
(I-2) 2-[2-chloro-4-(4-chlorophenoxy)phenyl]-2-hydroxy-3-(1,2,4-triazol-1-yl)propanoic acid
as active component 2) at least one compound, or an *N*-oxide, or an agriculturally useful salt thereof, selected from the group consisting of
(II-2) 4-(2,2-difluor-benzo[1,3]dioxol-4-yl)pyrrol-3-carbonitril,
(II-3) sulfur,
(II-4) 3-(difluoromethyl)-N-[(R)-2,3-dihydro-1,1,3-trimethyl-1H-inden-4-yl]-1-methyl-1H-pyrazole-4-carboxamide,
(II-5) 3-(difluoromethyl)-N-[(3RS)-7-fluoro-2,3-dihydro-1,1,3-trimethyl-1H-inden-4-yl]-1-methyl-1H-pyrazole-4-carboxamide,
(II-6) [(1S)-2,2-bis(4-fluorophenyl)-1-methyl-ethyl] (2S)-2-[(3-acetoxy-4-methoxy-pyridine-2-carbonyl)amino]propanoate,
(II-7) 2-{2-[(7,8-difluoro-2-methyl-3-quinolyl)oxy]-6-fluorophenyl}propan-2-ol,
(II-8) 5-fluoro-4-imino-3-methyl-1-(p-tolylsulfonyl)pyrimidin-2-one,
(II-9) (2RS)-2-[4-(4-chlorophenoxy)-2-(trifluoromethyl)phenyl]-1-(1H-1,2,4-triazol-1-yl)propan-2-ol,
(II-10) 3-(difluoromethyl)-1-methyl-N-(3',4',5'-trifluorobiphenyl-2-yl)-1H-pyrazole-4-carboxamide,
(II-11) 1-[2-({[1-(4-chlorophenyl)-1H-pyrazol-3-yl]oxy}methyl)-3-methylphenyl]-1,4-dihydro-4-methyl-5H-tetrazol-5-one,
(II-12) N-(2-fluorophenyl)-4-[5-(trifluoromethyl)-1,2,4-oxadiazol-3-yl]benzamide
(II-13) (2S,3S)-3-(o-tolyl)butan-2-yl N-{[4-methoxy-3-(propanoyloxy)-2-pyridyl]carbonyl}-L-alaninate,
wherein the weight ratio of compound I to compound II is from 20:1 to 1:20.

2. The composition according to claim 1, wherein active component 1) is compound (I-1).

3. The composition according to claim 1 or 2, wherein active component 2) is selected from the group consisting of
(II-3) sulfur,
(II-4) 3-(difluoromethyl)-N-[(R)-2,3-dihydro-1,1,3-trimethyl-1H-inden-4-yl]-1-methyl-1H-pyrazole-4-carboxamide,
(II-7) 2-{2-[(7,8-difluoro-2-methyl-3-quinolyl)oxy]-6-fluorophenyl}propan-2-ol,
(II-9) (2RS)-2-[4-(4-chlorophenoxy)-2-(trifluoromethyl)phenyl]-1-(1H-1,2,4-triazol-1-yl)propan-2-ol,
(II-10) 3-(difluoromethyl)-1-methyl-N-(3',4',5'-trifluorobiphenyl-2-yl)-1H-pyrazole-4-carboxamide,
(II-11) 1-[2-({[1-(4-chlorophenyl)-1H-pyrazol-3-yl]oxy}methyl)-3-methylphenyl]-1,4-dihydro-4-methyl-5H-tetrazol-5-one,
(II-12) N-(2-fluorophenyl)-4-[5-(trifluoromethyl)-1,2,4-oxadiazol-3-yl]benzamide.

4. The composition according to any one of claims 1 to 4, wherein active component 2) is is selected from the group consisting of
(II-3) sulfur,
(II-9) (2RS)-2-[4-(4-chlorophenoxy)-2-(trifluoromethyl)phenyl]-1-(1H-1,2,4-triazol-1-yl)propan-2-ol,
(II-10) 3-(difluoromethyl)-1-methyl-N-(3',4',5'-trifluorobiphenyl-2-yl)-1H-pyrazole-4-carboxamide,
(II-11) 1-[2-({[1-(4-chlorophenyl)-1H-pyrazol-3-yl]oxy}methyl)-3-methylphenyl]-1,4-dihydro-4-methyl-5H-tetrazol-5-one,
(II-12) N-(2-fluorophenyl)-4-[5-(trifluoromethyl)-1,2,4-oxadiazol-3-yl]benzamide.

5. The composition according to any one of claims 1 to 4, comprising compounds I and compounds II in a weight ratio of from 5:1 to 1:5.

6. The composition according to any one of claims 1 to 5, comprising compounds I and compounds II in a weight ratio of from 4:1 to 1:4.

7. The composition according any one of claims 1 to 6, comprising compounds I and compounds II in a weight ratio of from 2:1 to 1:2.

8. An agrochemical composition, comprising a solvent or solid carrier and the composition according to any one of claims 1 to 7.

9. The agrochemical composition according to claim 8 further comprising seed in an amount of from 1 g to 1000 g active components per 100 kg of seed.

10. The non-therapeutic use of the composition as defined in any one of claims 1 to 9 for controlling phytopathogenic harmful fungi.

11. The non-therapeutic use as defined in claim 10 for controlling phytopathogenic harmful fungi on cereals, corn, fruits, vegetables, rice, soybean, oil rapeseed, nuts, pulses, turf.

12. The non-therapeutic use according to any one of claims 10 to 11 for controlling phytopathogenic harmful fungi on wheat, barley, tomato, potato, grapes, apple, cucumber, melon, tree nuts, banana, citrus, soybean, rice, canola, corn, turf.

13. The non-therapeutic use according to any one of claims 10 to 12, for controlling of diseases selected from the group consisting of: Fusarium graminearum, SZymoseptoria tritici, Septoria nodorum synonym Parastagonospora nodorum, Puccinia striiformis, Puccinia recondita, Blumeria graminis f.sp.tritici, Pyrenophora teres, Pyrenophora graminea, Alternaria spp., Leptosphaeria maculans, Erysiphe graminis, Puccinia hordei, Rhynchosporium secalis, Cercospora spp. like Cercospora beticola, C. sojina, C. kikuchii, C. zea-maydis, Podosphaera fuligena, Podospheara xanthii, Colletotrichum spp. like C. graminicola, C. sojae aka C. truncatum, C. orbiculare aka C. lagenarium, Sclerotinia sclerotiorum.
